# EUROPEAN PATENT SPECIFICATION

(11) **EP 4 552 118 B1**
(45) Date of publication and mention of the grant of the patent: **23.09.2026**
(21) Application number: 23735829.6
(22) Date of filing: 27.06.2023
(51) Int. Cl.: G10K 11/178, F16F 15/02

(54) **STRUCTURAL DAMPER, STRUCTURALLY DAMPED STRUCTURE, AND METHOD**
STRUKTURDÄMPFER, STRUKTURELL GEDÄMPFTE STRUKTUR UND VERFAHREN
AMORTISSEUR STRUCTURAL, STRUCTURE STRUCTURELLEMENT AMORTIE ET PROCÉDÉ

(30) Priority: 04.07.2022 GB 202209763; 04.07.2022 EP 22275086
(43) Date of publication of application: 14.05.2025
(73) Proprietor: BAE SYSTEMS plc, London SW1Y 5AD (GB)
(72) Inventor: CHEER, Jordan, Southampton University Road Southampton Hampshire SO17 1BJ (GB); HOOK, Kristian Edward, Southampton University Road Southampton Hampshire SO17 1BJ (GB)
(74) Representative: BAE SYSTEMS plc Group IP Department
(86) International application number: PCT/GB2023/051675
(87) International publication number: WO 2024/009059

(56) References cited:
- EP-A1- 3 716 263
- CN-A- 106 023 978
- DE-A1- 102015 100 442
- TANG LILING ET AL: "A light-weight periodic plate with embedded acoustic black holes and bandgaps for broadband sound radiation reduction", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 150, no. 5, 10 November 2021 (2021-11-10), pages 3532 - 3543, XP012261095, ISSN: 0001-4966, [retrieved on 20211110], DOI: 10.1121/10.0007067

## Description

### FIELD

The present invention relates to a structural damper, a structurally damped structure, and a method of damping.

### BACKGROUND

In product design, it is often necessary to design a product that is both lightweight and a low noise structure. However, this results in a conflict between reducing the weight and increasing the sound radiation from the structure. It is known to use a structure referred to as an acoustic black hole (ABH) to provide structural damping.

An acoustic black hole was originally described by Mironov in 1988 (M.A. Mironov. Propagation of a flexural wave in a plate whose thickness decreases smoothly to zero in a finite interval. Soviet Physics: Acoustics, 34(3):318-319, 1988). The acoustic black hole effect is typically achieved by introducing a power law taper into a beam or plate that changes the thickness over a set distance. This change in thickness profile causes the flexural waves propagating along the direction of the ABH to decrease in wave speed. In the theoretical limit, there is no reflection of the waves from the ABH. The ABH effect can also be achieved using other gradient functions, including a power-cosine curve, for example.

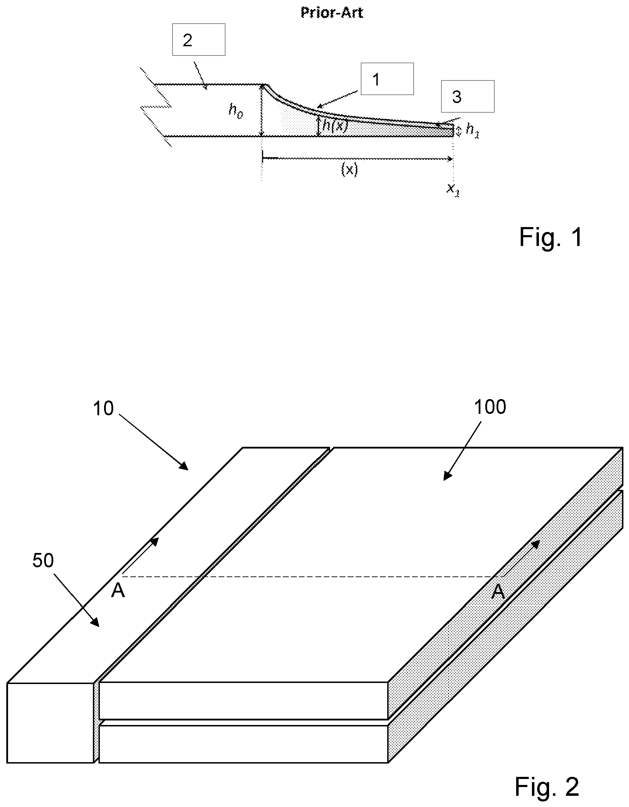

Figure 1 shows an example of an ABH 1 on a beam 2. The ABH 1 is provided with a layer of damping material 3. The flexural wave speed *c_{f}* (x), decreases as the taper height decreases as: ${c}_{f} \left(x\right) = {\left(\frac{{Eh}^{2} \left(x\right)}{12 {ρ}_{s}}\right)}^{\frac{1}{4}} {ω}^{\frac{1}{2}}$ where E is the Young's modulus of the ABH material, h(x) is the height of the taper, ρₛ is the density of the ABH material and ω is the angular frequency.

From Equation 1 it can be seen that if the tip of the ABH reduces to zero thickness, i.e. h(x)=0, then the flexural wave speed at the tip will be *c_{f}* (x)=0. In this ideal, theoretical case, the incident wave will not be reflected from the end of the tapered beam and will therefore, be effectively attenuated.

In this respect, acoustic black holes are known in the art. For example, 'Higher-order WKB analysis of reflection from tapered elastic wedges' Journal of Sound and Vibration 449 (2019) 368-388 (Angelis Karlos, Stephen J. Elliot, Jordan Cheer), the contents of which are incorporated herein, provides examples of different types of 'one-dimensional' acoustic black holes. The thickness variations, of these acoustic black holes, are according to the expressions provided in Table 1 below:

**Table 1**

| Thickness profile type | Thickness variation | Length of ideal wedge | Decay parameter |
|---|---|---|---|
| Power-law | $h = {h}_{0} {\left(1-\frac{x}{{x}_{0}}\right)}^{n}$ | ${x}_{0} = \frac{{x}_{1}}{1 - {\left(\frac{{h}_{1}}{{h}_{0}}\right)}^{1 / n}}$ | - |
| Exponential | $h = {h}_{0} {e}^{- βx}$ | ∞ | $β = \frac{1}{{x}_{1} ln \left(\frac{{h}_{0}}{{h}_{1}}\right)}$ |
| Power-cosine | $h = {h}_{0} {cos}^{n} \left(\frac{πx}{2 {x}_{0}}\right)$ | ${x}_{0} = \frac{{πx}_{1}}{2 arccos \left({\left(\frac{{h}_{1}}{{h}_{0}}\right)}^{1 / n}\right)}$ | - |
| Gaussian | $h = {h}_{0} {e}^{- {γx}^{2}}$ | ∞ | $γ = \frac{1}{{x}_{1}^{2} ln \left(\frac{{h}_{0}}{{h}_{1}}\right)}$ |
| Compound power-law | $h = \left\{\begin{matrix}\frac{{h}_{0}}{2} \left(2-{\left(\frac{2 x}{{x}_{0}}\right)}^{n}\right) , 0 \leq x \leq \frac{{x}_{0}}{2} \\ \frac{{h}_{0}}{2} {\left(2-\frac{2 x}{{x}_{0}}\right)}^{n} , \frac{{x}_{0}}{2} \leq x \leq {x}_{0}\end{matrix}\right.$ | ${x}_{0} = \frac{2 {x}_{1}}{2 - {\left(\frac{{h}_{1}}{{h}_{0}}\right)}^{1 / n}}$ | - |

where:
'x' is the distance, in the length direction, from the upstream end of the acoustic black hole (i.e. at the start of the taper);
'x1' is the length of the acoustic black hole;
'h' is the thickness of the acoustic black hole (at position (x));
'h0' is the thickness of the acoustic black hole at the upstream end of the acoustic black hole (i.e. at position (x = 0));
'h1' is the thickness of the acoustic black hole at the downstream end of the acoustic black hole (i.e. at position (x = x1));
'n' is power coefficient of the shape function (which must be greater or equal to 2).

These parameters are illustrated in Figure 1.

Structural dampers have been developed that incorporate ABHs and active control components, such as actuators, sensors and/or controllers. Whilst structural dampers are highly advantageous in providing damping of primary structures, they have several associated drawbacks. In conventional structural dampers, the damping effect is sub-optimal, and powerful actuators may be required to provide sufficient damping. Powerful actuating forces may lead to damage or deterioration of ABHs. Furthermore, the performance of the structural damper may degrade over time, due to exposure to contaminants and a lack of support or protection for the active control components and/or the ABHs. To broaden the potential applications of structural dampers, it is desirable to overcome these limitations.

It is one aim of the present invention, amongst others, to provide a improved structural damper, structurally damped structure, vehicle, structure and/or method, and/or address one or more of the problems discussed above, or discussed elsewhere, or to at least provide an alternative solution.

EP3716263 A1 describes a structural damper having an acoustic black hole. DE102015100442 A1 describes an oscillatable structure having an acoustic black hole. CN106023978 A describes a double-layer-board sonic black hole vibration and noise reduction structure. Tang Liling ET AL: "A light-weight periodic plate with embedded acoustic black holes and bandgaps for broadband sound radiation reduction", 10 November 2021 describes the sound radiation properties of a plate comprising periodically tangled ABH cells.

### SUMMARY

According to a first aspect of the present invention, there is provided a structural damper for providing damping of a primary structure as defined in independent claim 1.

According to a second aspect of the present invention, there is provided a structurally damped structure as defined in claim 11.

According to a third aspect of the present invention, there is provided a method of damping as defined in independent claim 13.

Further advantageous aspects of the present invention are defined in the dependent claims.

### BRIEF DESCRIPTION OF THE FIGURES

Embodiments of the invention will now be described by way of example only with reference to the figures, in which:
Figure 1 shows an acoustic black hole on a beam according to the prior art;
Figure 2 shows structurally damped structure;
Figure 3 shows a perspective cross section of the structurally damped structure of Figure 2;
Figure 4 shows side cross section of the structurally damped structure of Figure 2;
Figure 5 to 8 show structurally damped structures;
Figure 9 shows a vehicle;
Figure 10 shows a structure; and
Figure 11 shows general methodology principles.

### DETAILED DESCRIPTION

In the description which follows, acoustic black holes, structural dampers, structurally damped structures, and methods, are described.

The term "acoustic black hole", or "ABH", is used to refer to an element, member, or structure, which, in use, exhibits the acoustic black hole effect.

In the description herein, acoustic black holes comprise regions of taper. In the examples shown and described, the taper is a thickness taper. That is, the thickness of the acoustic black hole tapers (i.e., reduces or diminishes in thickness in a direction and along a line toward a point, line or region). Additionally, or alternatively, tapering may be in shape. A thickness or shape may be referred to generally as a "spatial property". Conventional ABHs incorporate tapers in thickness, from a first thickness to a second thickness. The first thickness is typically a non-zero thickness. The second thickness is, in the ideal case, a zero thickness. A thickness or shape taper may be advantageous in that it may be simpler to manufacture than, for example, a taper in material and/or material property.

However, in contrast to a thickness taper, the taper could also be a "functional taper" or a "functional grading". That is, the tapering could be a tapering function of the acoustic black hole, rather than a tapering thickness. For example, the tapering may be a tapering of material and/or material property. The material property may be, for example, density and/or rigidity. This may be achieved by use of additive layer manufacturing (e.g. 3D printing) to form an acoustic black hole having a tapering, graded, or varying, material property. A tapering in material and/or material property may be advantageous in that thin ABH regions need not be provided, which may improve the structural strength, and operational lifetime, of the ABH.

In this way, it is appropriate to refer to ABH tapers as tapering of a "characteristic". Tapering may be from a "first characteristic" to a "second characteristic". A similar or identical effect to a thickness tapering may be achieved by a tapering in material and/or material property. For example, a tapering from a region of high rigidity to a region of low rigidity may provide a reduction of the flexural wave speed to *c_{f}* (x)=0, as described above, thereby to provide the ABH effect.

The term "structural damper" is used to refer to an arrangement, assembly or kit comprising an acoustic black hole (here, a first and second acoustic black hole) and one or more active control components (e.g., comprising an actuator, sensor, and/or a controller). The structural damper may otherwise be referred to as an "active acoustic black hole". A structural damper may be any arrangement described below in absence of a primary structure. Whilst in the exemplary embodiments described herein the structural damper comprises a first ABH and second ABH (i.e., a single "compound ABH"), the structural damper may comprise a plurality of compound ABHs and associated active control components (e.g., a plurality of actuators, sensors and/or controllers).

The term "structurally damped structure" is used to refer to a structure, arrangement, assembly or kit comprising an acoustic black hole and a primary structure. The structurally damped structure may also comprise active control components (e.g., comprising a sensor, an actuator, and a controller). That is, the structurally damped structure may comprise a primary structure and a structural damper. As above, whilst in the exemplary embodiments described herein the structurally damped structure comprises a structural damper comprising a single compound ABH, the structurally damped structure may comprise a plurality of compound ABHs and associated control components (e.g., a plurality of actuators, sensors and/or controllers).

The term "primary structure" is used to refer to a structure that the damper device is arranged to provide structural damping to. The primary structure is a structure that, in use, has a vibration applied to it. The primary structure may be a structure that is vibrated, directly or indirectly, by a source of vibration (e.g., an engine, fluid flow, etc.).

The structural damper may be formed in or on the primary structure. For example, the structural damper may be integral to the primary structure. Alternatively, or additionally, the structural damper may be coupled to the primary structure. That is, the structural damper may be manufactured separately and coupled, or connected, to the primary structure.

The term "damper structure" is used to refer to a structure that is coupled to an ABH (e.g., mechanically coupled) such that it can transmit vibration and/or flexural waves through its structure to and from an ABH. The ABH may be formed in or on the damper structure. The damper structure may be coupled, or connected to, the primary structure, or the damper structure may be formed in or on the primary structure.

Referring to Figure 2, a perspective view of a structurally damped structure 10 is shown. The structurally damped structure 10 comprises a primary structure 50 and a structural damper 100. The structural damper 100 is for providing damping of the primary structure 50.

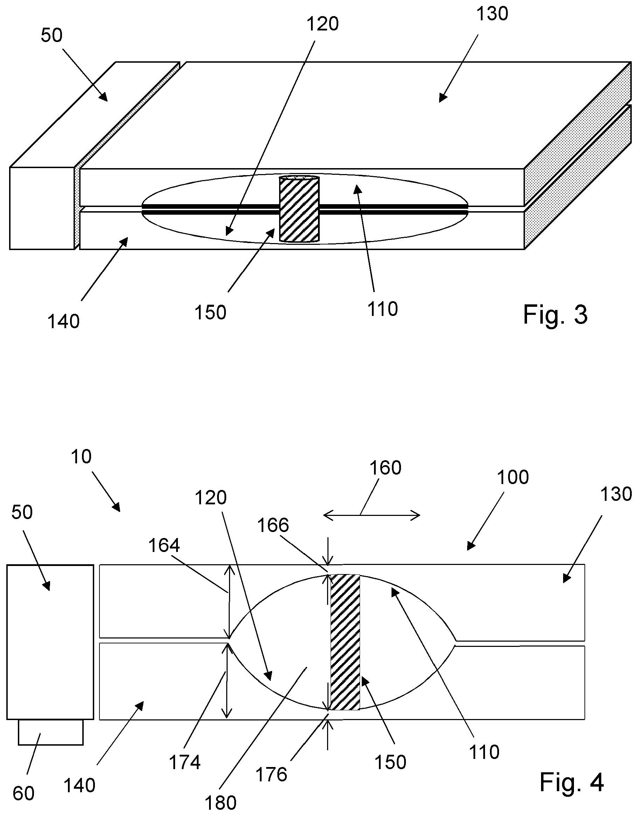

Referring to Figure 3, a perspective cross-sectional view of the structurally damped structure 1 of Figure 2 is shown. The cross section is taken along the line A - A and viewed in the direction of the arrows shown in Figure 2. The structural damper 100 comprises a first ABH 110 and a second ABH 120. The structural damper 100 further comprises an actuator 150. The actuator 150 is provided in contact with the first ABH 110 and is also in contact with the second ABH 120. The actuator 150 is configured, or is adapted, to apply an actuating force to the first ABH 110 and the second ABH 120.

The use of the actuator 150 (and controller, described below), to provide a controlled actuating force to the damper structure advantageously improves the low-frequency performance of an ABH. This allows the user of structural damping, using an ABH, in a more effective way and in a wider variety of applications. It may also control resonances that would otherwise occur without the presence of an actuator. During operation, the actuator 150 advantageously acts to control the vibrational energy in the first ABH 110 and second ABH 120. This causes the actuator to have a greater damping effect, compared with for example an actuator not configured to apply the actuating force to the first ABH 110 and second ABH 120. As a result, this enables a reduction in the size (and strength) of the actuator, that would otherwise be required.

Furthermore, by applying the actuating force to the first ABH 110 and second ABH 120, the damping effect is enhanced, for example compared with an actuator applying an actuating force to a single ABH.

The actuator 150 may be configured to apply an actuating force to the first ABH 110 and second ABH 120 simultaneously.

The structurally damped structure 10 may constructed in a number of alternative ways.

In an exemplary embodiment (not shown), the structurally damped structure 10 comprises a first primary structure and a second primary structure. The first ABH 110 is provided at the first primary structure, and the second ABH 120 is provided at the second primary structure. That is, in this exemplary embodiment, the structural damper is formed in the first primary structure and second primary structure. Advantageously, by the first ABH being provided at the first primary structure and second ABH being provided at the second primary structure, construction of the structural damper is simplified as separate damper structure(s) need not be provided in which to form the ABHs. Similarly, in this way, a more lightweight structurally damped structure is obtained.

In another exemplary embodiment (not shown), the structurally damped structure 10 comprises a single (e.g., unitary) primary structure comprising a first primary structure portion and a second primary structure portion. The first ABH 110 is provided at the first primary structure portion, and the second ABH 120 is provided at the second primary structure portion. That is, in this exemplary embodiment, the structural damper is formed in the primary structure. Advantageously, by the first ABH second ABH being provided at the primary structure, construction of the structural damper is simplified as separate damper structure(s) need not be provided in which to form the ABHs. Similarly, in this way, a more lightweight structurally damped structure is obtained.

In another exemplary embodiment (not shown), the structurally damped structure 10 comprises a primary structure and a structural damper. The first ABH 110 is provided at the structural damper, and the second ABH 120 is provided at the primary structure. That is, in this exemplary embodiment, the structural damper may be understood to comprise a region, portion, or part of the primary structure, by virtue of the second ABH being provided at the primary structure.

In another exemplary embodiment (as shown in the figures), the structurally damped structure 10 comprises a primary structure and a structural damper. The structural damper comprises a first damper structure and a second damper structure. The first ABH 110 is provided at the first damper structure, and the second ABH 120 is provided at the second damper structure. The structural damper is coupled, or connected to, the primary structure. That is, the structural damper is an add-on component or device.

Referring back to Figure 3, the structural damper 100 comprises a first damper structure 130 and a second damper structure 140. The first ABH 110 is provided at the first damper structure 130. The second ABH 120 is provided at the second damper structure 140. The structural damper 100 is coupled to, or connected to, the primary structure 50.

The term "compound ABH" is used to refer to the combination of the first ABH 110 and second ABH 120. The term "compound ABH" is a term of the art. In the compound ABH, the first ABH 110 and second ABH 120 are arranged, or provided, such that they face one another. That is, the first ABH 110 and second ABH 120 are arranged in a facing manner. Advantageously, by providing the first ABH 110 and second ABH 120 arranged in a facing manner, the thinnest region of the ABHs may be vertically displaced over (i.e., placed on top of) a primary structure. The risk of damage to the ABHs is thereby reduced, as thin regions of the ABH do not extend laterally/project freely from the edge of the primary structure 10, as in some conventional add-on dampers comprising ABHs. Additionally, advantages are obtained in space-saving, in that the total footprint of the primary structure 50 and structural damper 100 need not be increased beyond that of the primary structure 50 itself.

The first ABH 110 and second ABH 120 may be integrally formed. This may be achieved by use of additive layer manufacturing, moulding, or the like. This is highly advantageous in coupling the first ABH 110 and second ABH 120 such that vibrations and/or flexural waves may be passed to both first and second ABH 110, 120.

The first ABH 110 and second ABH 120 may be separately formed, and subsequently coupled to one another. Advantageously, this may simplify manufacture of the first ABH 110 and second ABH 120. Furthermore, this may also facilitate assembly and disassembly of the structural damper 100 for maintenance and inspection.

Referring to Figure 4, the cross section of the structurally damped structure 10 of Figure 3 is shown in a side view. The first ABH 110 is in the form of a concave circular recess provided in the first damper structure 130. The first ABH 110 is embedded in the first damper structure 130. The second ABH 120 is in the form of a concave circular recess provided in the second damper structure 140. The second ABH 120 is embedded in the second damper structure 140. By providing ABHs in the form of concave recesses, a low-profile structural damper 100 is obtained. Furthermore, a circular recess simplifies manufacturing.

A first axis 160 is shown in Figure 4. In this exemplary embodiment, the first axis 160 is a radial axis of the circular ABHs. The first ABH 110 comprises, in the first axis 160, a tapering from a first characteristic to a second characteristic. In this way, the first ABH 110 is configured to exhibit the ABH effect. In the exemplary embodiment illustrated in the figures, the taper is a thickness taper, and as such the characteristic is a thickness. In Figure 4, the first characteristic is indicated as first thickness 164, and the second characteristic is indicated as second thickness 166.

The second ABH 120 comprises, in the first axis 160 a tapering from a first characteristic to a second characteristic. In this way, the second ABH 120 is configured to exhibit the ABH effect. In the exemplary embodiment illustrated in the figures, the taper is a thickness taper, and as such the characteristic is a thickness. In Figure 4, the first characteristic is indicated as first thickness 174, and the second characteristic is indicated as second thickness 176.

It is possible to use alternative ordinal numbers (e.g., "third", "fourth") to refer to the characteristics of the second ABH 120. For example, the first characteristic and second characteristic of the second ABH 120 may be referred to as "third characteristic" and "fourth characteristic", which may clarify and distinguish said characteristics from those of the first ABH 110. Nevertheless, the characteristic of the second ABH 120 may similarly be a thickness, shape, material and/or material property, for example rigidity and/or density.

A cavity 180 is defined by the first ABH 110 and second ABH 120. In other words, a cavity is formed, or provided, by the first ABH 110 and second ABH 120 being provided in a facing manner. The actuator 150 is provided in the cavity.

In this way, the actuator 150 is supported and protected by the first ABH 110 and second ABH 120, by virtue of being provided in the cavity 180 defined by the first and second ABH 110, 120.

In an exemplary embodiment, the cavity 180 may be partially, or substantially, enclosed. In this way, structural strength of the first ABH 110 and second ABH 120 is improved. Furthermore, the actuator 150 is supported and protected, but may still be accessible for monitoring and maintenance.

In a particularly advantageous embodiment, and as illustrated in the figures, the cavity 180 is enclosed (e.g., sealed). Advantageously, the actuator 150 is protected from the external environment, which may enable the structural damper 100 to be employed in harsh conditions which would otherwise damage the actuator 150, e.g., underwater. Furthermore, the structural strength of the first ABH 110 and second ABH 120 is improved, by virtue of mutual support. Furthermore, in this way, a volume of air may be retained within the cavity 180. This is advantageous in improving damping performance of the structural damper 100, as the air retained within the cavity 180 provides a level of damping. Additionally, ingress of air or contaminants into the cavity 180 is prevented, thus reducing degradation of the structural damper 100 and the materials thereof over time. The lifetime of the structural damper 100 is thus increased.

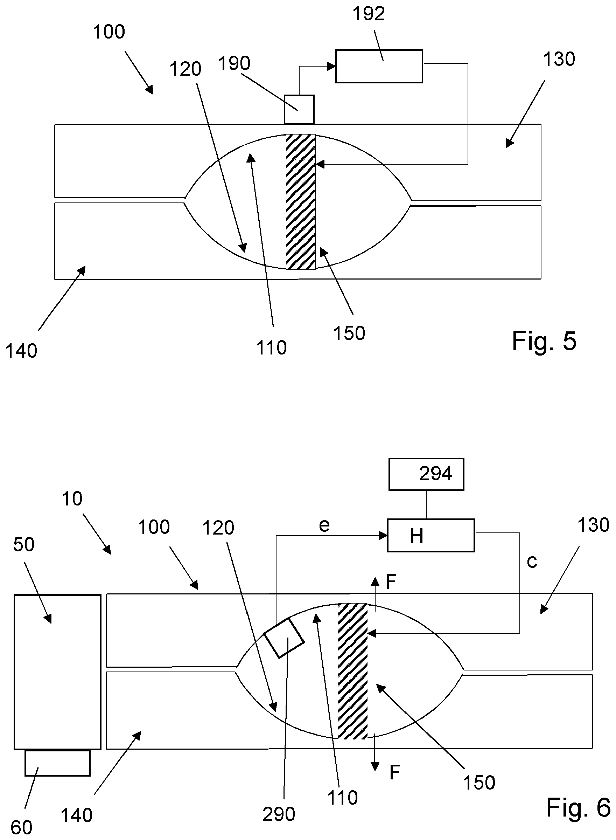

Referring to Figure 5, the structural damper 100 is shown in isolation. The structural damper 100 further comprises a sensor 190 and a controller 192. The controller 192 is configured to control the actuator in dependence on a signal from the sensor 190. The sensor 190 may be configured to sense a signal that is dependent on or can be related to at least one of: the vibration of the primary structure; a flexural wave in the primary structure; the acoustic radiation from the primary structure. The sensor 190 may be configured to sense a signal that is dependent on or can be related to at least one of vibration of the damper structures 130, 140 and/or a flexural wave in the damper structures 130, 140. The sensor 190 may be configured to sense the vibration of the damper structures 130, 140 and/or a flexural wave in the damper structures 130, 140.

Here, the sensor 190 and controller 192 are provided outside of the cavity 180, whereas the actuator 150 is provided within the cavity 180. In this way, the actuator 150 is protected, and its performance may be improved or enhanced. The sensor 190 and controller 192 may be of another system or arrangement, and so may be pre-provided outside of the cavity 180 but made use of by the structural damper 100. This is highly advantageous in employing the structural damper 100 in a retro-fit manner.

Applicable to all embodiments described herein, the first ABH 110 and/or second ABH 120 may comprise a damping material (not shown) provided on at least a region of the first ABH 110 and/or second ABH 120. The damping material is provided on the surface of the first ABH 110 and/or second ABH 120, preferably the inner/facing surface. Where the first ABH 110 and/or second ABH 120 comprises tapering, the damping material may be provided on the tapering surface of the first ABH 110 and/or second ABH 120. The damping material may be provided on the whole of the first ABH 110 and/or second ABH 120. The damping material may be a viscoelastic layer applied to at least one of the sides of the first ABH 110 and/or second ABH 120. The damping material may be a thin layer.

Many alternative constructions of the structural damper 100 comprising at least one sensor and a controller are possible, to provide damping of a primary structure 150. Several exemplary embodiments of structural dampers and structurally damped structures will be described below. In some embodiments, the sensor and controller may be provided as part of a separate system, and utilised by the structural damper 100 in providing damping. That is, the structural damper 100 (absent a sensor and controller) may be a retrofit kit.

As mentioned above, the structural dampers described below are arrangements, assemblies or kits comprising an acoustic black hole and active control components (e.g., comprising an actuator, and also in some examples a sensor and a controller).

The structurally damped structures described below are structures, arrangements, assemblies, or kits, each comprising a primary structure and a structural damper. The structurally damped structures are configured to provide structural damping of a primary structure.

The primary structure 50 may be attached or otherwise connected to a vibration source 60 (shown schematically in Figures 6 to 8) which, in this case, is an engine. The vibration source 60 produces a vibratory excitation force (V) on the primary structure, which induces vibration and flexural waves in the primary structure. This also causes the primary structure to emit acoustic radiation, i.e., noise.

Each acoustic black hole described herein comprises a tapering thickness (h), whereby the thickness (h) of the acoustic black hole decreases according to the following power law profile: $h \left(x\right) = {h}_{0} {\left(1-\frac{x}{{x}_{0}}\right)}^{n}$ where the variables in Equation 2 are as defined for Table 1 (and Figure 1).

The change in thickness profile causes the flexural waves to decrease in wave speed along the acoustic black hole, thereby reducing the reflection of the flexural waves from the acoustic black hole and so effectively providing attenuation of the flexural waves.

However, it will be appreciated that any type of acoustic black hole may be used, including those with different tapering profiles to Equation 2 above.

Referring to Figure 6, a structurally damped structure 10 is shown. The structurally damped structure 10 is configured to provide structural damping of the primary structure 50.

The actuator 150 is configured to apply an actuating force to the first ABH 110 and second ABH 120.

A sensor 290 senses the movement of one or more of the first ABH 110 and second ABH 120. In the example illustrated in Figure 5, the sensor 290 is provided on (e.g., mounted on) the first ABH 110. In this respect, the movement of the first ABH 110 and/or second ABH 120 causes a voltage to be induced in the sensor 690 that is representative of the deformation. The sensor 690 is connected to a controller (H) such that the voltage induced in the sensor 690 is passed to the controller (H), forming an error signal (e) that is fed back to the controller (H) (i.e. a feedback signal).

The actuator 150 is configured to apply an actuating force (F) to the first ABH 110 and second ABH 120.

The controller (H) is connected to an electrical power supply 294 and has an output that is connected to the actuator 150.

The controller (H) is configured to produce a control signal (c), in the form of an output voltage, that is applied to the actuator 150, in dependence on the error signal (e).

The voltage applied to the actuator 150 causes it to apply an actuating force (F) to the first ABH 110 and second ABH 120. In this respect, energy is input from the actuator 150 into the first ABH 110 and second ABH 120.

The controller (H) is configured to control the actuator 150 in dependence on the received error signal (e) so as to provide structural damping of the primary structure 50.

In this respect, the controller (H) controls the actuating force (F) applied by the actuator 150, to the first ABH 110 and second ABH 120, so as to attenuate (in this case minimise), the vibration of the primary structure 50.

Furthermore, the first ABH 110 and second ABH 120 acts to control (namely to reduce) the flexural vibrations produced on the primary structure 50, by the vibration source 60.

In the currently described embodiment the controller (H) controls the actuating force applied by the actuator 150, to the first ABH 110 and second ABH 120, to control vibration of the primary structure using the following direct velocity feedback control: $c \left(n\right) = - H \left(z\right) e \left(n\right)$

Where c(η) is the control signal, e(η) is the error signal, η is the time index and H(z) is a simple gain.

However, it will be appreciated that any suitable controller may be used in place of H(z), being that either digital or analogue in nature.

It will be appreciated that any suitable type and arrangement of sensors and actuators may be used. In this respect, it will be appreciated that the sensor 290 could be provided on the second ABH 120, or a sensor provided on each of the first ABH 110 and second ABH 120. The sensor 290 may alternatively be provided on an outer side of the first ABH 110 and/or second ABH 120, such as the arrangement illustrated in Figure 5.

As stated above, the actuator 150 is configured to apply the actuating force to the first ABH 110 and second ABH 120. This may advantageously act to control the vibrational energy in the first ABH 110 and second ABH 120, which may cause the actuator 150 to have a greater damping effect. Accordingly, this may allow for a reduction in the size (and strength) of the actuator 150, than would otherwise be required.

Furthermore, the use of the controller (H) and actuator 150, to provide a controlled actuating force may advantageously improve the low-frequency performance of the first ABH 110 and second ABH 120, which may allow for the use of structural damping, using ABHs 110, 120, in a more effective way and in a wider variety of applications. It may also reduce resonances that would otherwise occur.

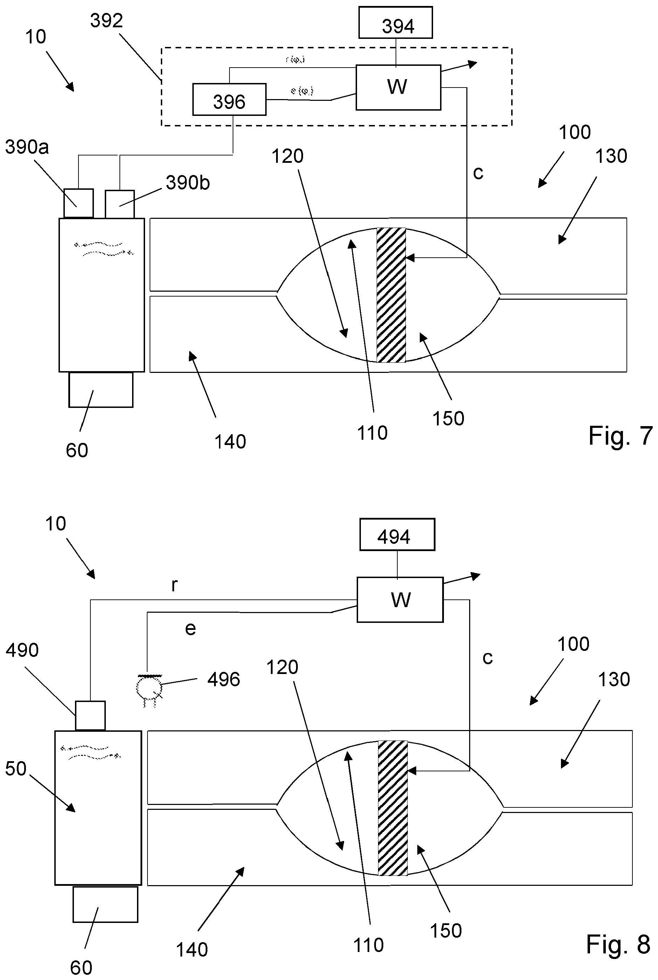

Referring to Figure 7, a structurally damped structure 10 is shown. The actuator 150 is configured to apply an actuating force to the first ABH 110 and second ABH 120.

First and second sensors 390a, 390b are mounted on the primary structure 50, with the second sensor 390b positioned downstream of the first sensor 390a. For the avoidance of doubt, downstream may be defined as downstream relative to a vibration generated by the vibration source, as said vibration propagates from the vibration source to the acoustic black hole.

The first and second sensors 390a, 390b are PZT sensors that are configured to sense the displacement of the primary structure 50 at their respective locations.

The controller 392 comprises a control unit (W) and a wave decomposition unit 396. The sensors 390a, 390b are connected to the wave decomposition unit 396 and the wave decomposition unit 396 is configured to decompose the vibration of the primary structure 50 into the incident and reflected wave components (ϕ+ and ϕ-). The incident component is used as the feedforward reference signal (r) and the reflected component is used as the feedback error signal (e).

The control unit (W) is connected to an electrical power supply 394.

The control unit (W) is configured to output a control signal (c), in the form of an output voltage applied to the actuator 150 in dependence on the received feedforward reference signal (r) and feedback error signal (e) so as to control the reflected wave from the first ABH 110 and/or second ABH 120. In this respect, the controller (W) is configured to attenuate the reflected wave from the first ABH 110 and/or second ABH 120. Accordingly the controller (W) acts to control the flexural wave in the primary structure 50.

In the currently described embodiment the controller (W) controls the reflected wave from the first ABH 110 and/or second ABH 120 using the following control algorithm: $w \left(n+1\right) = γ w \left(n\right) - {αϕ}_{+}^{T} \left(n\right) ϕ _ \left(n\right)$ where w is the filter coefficient, n is the time index, α is the convergence gain, γ is the leakage coefficient, ϕ_+ is the vector of reference signals provided by the measured incident wave filtered by the plant response and ϕ_- is the measured reflected wave.

However, it will be appreciated that any suitable control algorithm may be used.

Referring to Figure 8, a structurally damped structure 10 is shown. The actuator 150 is configured to apply an actuating force to the first ABH 110 and second ABH 120.

The structurally damped structure 10 differs from that described in relation to Figure 7 in that the first and second sensors 390a, 390b are replaced by an acoustic sensor, in the form of a microphone 496, located in the radiated sound field of the primary structure 50. In an alternative embodiment, multiple acoustic sensors may be used at different locations in the radiated sound field.

The microphone 496 is connected to an input of the controller (W) and passes this sound signal, as an error signal (e), to the controller (W).

A movement sensor 490 is mounted on the primary structure 50 upstream of the actuator 150 and provides a feedforward reference signal (r) to the controller (W).

The controller (W) is configured to output a control signal (c), in the form of an output voltage applied to the actuator 150 in dependence on the feedforward reference signal (r) and on the error signal (e) so as to control the acoustic radiation from the primary structure 50. In this respect, the controller (W) is configured to minimise the acoustic radiation from the primary structure 50.

The controller (W) is connected to an electrical power supply 494.

In the currently described embodiment the controller (W) controls the vibration of the primary structure 50 and this controller can be implemented using a Finite Impulse Response (FIR) filter, where the coefficients can be updated as follows using the well-known filtered-reference least mean squares algorithm: $w \left(n+1\right) = γ w \left(n\right) - α {r}^{T} \left(n\right) e \left(n\right)$ where w is the filter coefficient, n is the time index, α is the convergence gain, γ is the leakage coefficient, r is the vector of current and past filtered-reference signals and e is the error signal, where the error signal is provided by the microphone 496.

However, it will be appreciated that any suitable control algorithm may be used.

In each of the described embodiments of structural dampers and structurally damped structures comprising structural dampers, the use of the controller and actuator(s), to provide a controlled actuating force to the acoustic black hole and/or primary structure may advantageously improve the low-frequency performance of an acoustic black hole, which may allow for the use of structural damping, using an acoustic black hole, in a more effective way and in a wider variety of applications. It may also reduce resonances that would otherwise occur.

Whilst the present invention has been described and illustrated with reference to particular embodiments of structural dampers and structurally damped structures comprising structural dampers, it will be appreciated by those of ordinary skill in the art that the invention lends itself to many different variations not specifically illustrated herein.

For example, in each of the described embodiments of structural dampers and structurally damped structures comprising structural dampers, any suitable corresponding type of sensor or actuator may be used. In this respect, the sensor(s) may be of any suitable type, including displacement sensor, a velocity sensor, a strain sensor, a vibration sensor, an accelerometer, etc. The actuator may be of any suitable type, including a PZT, an electro-magnetic actuator, a pneumatic or hydraulic actuator, etc.

In addition, the location, number and arrangement of the actuators and sensors may be varied and is not limited to that of the described embodiments of structural dampers and structurally damped structures comprising structural dampers.

Any of the control/actuation/sensor arrangements of any of the above described embodiments of structural dampers and structurally damped structures comprising structural dampers may be combined, in any combination, to control one or more of the vibration of the primary structure, a flexural wave in the primary structure and the acoustic radiation from the primary structure.

In embodiments where the controller is an adaptive controller, a non-adaptive controller may be used instead (and vice-versa). However, use of an adaptive controller may be advantageous as it may provide improved damping that adapts to changing external conditions.

The primary structure of any of the embodiments described herein may be provided with a plurality of the respective structural dampers of that embodiment, so as to provide structural damping of the primary structure at multiple locations. Furthermore, the primary structure may be provided with a plurality of structural dampers that are a mixture of more than one of the described embodiments.

In particular, whilst the structurally damped structures 10 and structural dampers 100 illustrated in the figures comprises a single compound ABH (comprising first ABH 110 and second ABH 120), other constructions of structurally damped structure and structural dampers within the scope of the present invention may comprise a plurality of compound ABHs and associated active components (e.g., a plurality of actuators, one provided at each compound ABH). That is, the structurally damped structure 10 and/or structural damper 100 may comprise a first ABH and second ABH as a first compound ABH, and a third ABH and fourth ABH as a second compound ABH, and so on. In such a construction, a first actuator may be provided in contact with the first ABH and second ABH, wherein the actuator is configured to apply an actuating force to the first ABH and the second ABH, and a second actuator may be provided in contact with the third ABH and fourth ABH, wherein the actuator is configured to apply an actuating force to the third ABH and the fourth ABH, and so on. In general, this construction may alternatively be described as a structurally damped structure 10 comprising a plurality of structural dampers 100. A structurally damped structure and structural damper comprising a plurality of compound ABHs will be otherwise consistent with all features described above. The actuators may be operated independently, separately, in combination, in dependence on one another and/or in a related manner.

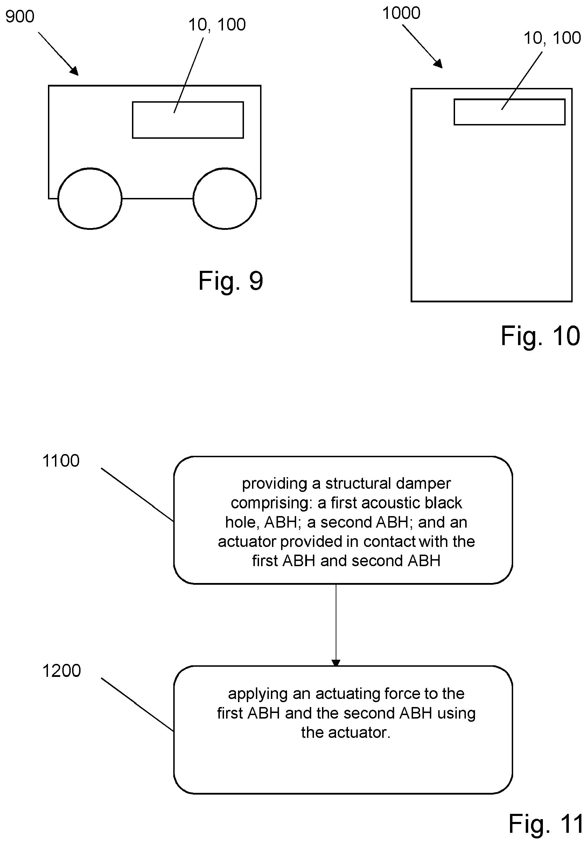

Referring to Figure 9, a vehicle 900 is schematically shown. The vehicle 900 comprises a structural damper 100 and/or a structurally damped structure 10, according to any of the embodiments described herein. The vehicle may be a land-based vehicle, watercraft, or aircraft. The vehicle 900, or a component thereof, may comprise, or be, the primary structure.

Referring to Figure 10, a structure 1000 is schematically shown. The structure 1000 comprises a structural damper 100 and/or a structurally damped structure 10, according to any of the embodiments described herein. The structure may be a building, infrastructure, construction, or the like. The structure 1000, or a component thereof, may comprise, or be, the primary structure.

Referring to Figure 11, a method of damping is schematically shown. Step 1100 comprises providing a structural damper comprising: a first acoustic black hole, ABH; a second ABH; and an actuator provided in contact with the first ABH and second ABH. Step 1200 comprises applying an actuating force to the first ABH and the second ABH using the actuator.

## Claims

1. A structural damper (100) for providing damping of a primary structure (50), the structural damper configured to be coupled to, or connected to, the primary structure, the structural damper comprising:
a first damper structure (130);
a second damper structure (140);
a first acoustic black hole, ABH (110), wherein the first ABH (110) is in the form of a concave circular recess provided in the first damper
structure;
a second ABH (120), wherein the second ABH is in the form of a concave circular recess provided in the second damper structure:
wherein the combination of the first ABH and the second ABH forms a compound ABH, wherein the first ABH and second ABH are arranged such that they face one another,
and wherein
a cavity (180) is defined by the first ABH and second ABH being provided in a facing manner,
**characterised in that** the structural damper further comprises:
an actuator (150) provided in the cavity and in contact with the first ABH and second ABH, wherein the actuator is configured to apply an actuating force to the first ABH and the second ABH.

2. The structural damper (100) as claimed in claim 1, further comprising:
at least one sensor (190, 290, 390, 490); and
a controller (H, W) configured to control the actuator in dependence on a signal from the at least one sensor.

3. The structural damper (100) as claimed in any one of the preceding claims, wherein the cavity (180) is enclosed.

4. The structural damper (100) as claimed in any one of the previous claims, wherein the first ABH and second ABH are integrally formed.

5. The structural damper (100) as claimed in any one of claims 1 to 3, wherein the first ABH and second ABH are separately formed and coupled to one another.

6. The structural damper (100) as claimed in any one of claims 2 to 5, when dependent directly or indirectly on claim 2, wherein the controller is configured to control the actuating force applied by the actuator, to the first ABH and second ABH, so as to control at least one of:
(a) the vibration of the primary structure;
(b) a flexural wave in the primary structure;
(c) the acoustic radiation from the primary structure.

7. The structural damper (100) as claimed in claim 6, wherein the controller is configured to control at least one of features (a) to (c) by controlling: the vibration of the first ABH and/or second ABH; and/or a flexural wave in the first ABH and/or second ABH.

8. The structural damper (100) as claimed in any one of claims 2 to 7, when dependent directly or indirectly on claims 2, wherein the controller is configured to control the reflected flexural wave from the first ABH and/or second ABH.

9. The structural damper (100) as claimed in any one of claims 1 to 8, when dependent directly or indirectly on claim 2, wherein the controller is configured to control the acoustic radiation from the primary structure.

10. The structural damper (100) as claimed in any one of the previous claims, wherein the first ABH and/or second ABH is provided with a damping material.

11. A structurally damped structure (10) comprising:
a primary structure (50); and
a structural damper (100) according to any preceding claim arranged to provide structural damping of the primary structure.

12. The structurally damped structure (10) as claimed in claim 11, wherein the primary structure (50) is comprised in a vehicle (900) or structure (1000).

13. A method of damping comprising:
providing a structural damper for providing damping of a primary structure (50), the structural damper (100) configured to be coupled to, or connected to, the primary structure (50), the structural damper comprising:
a first damper structure (130);
a second damper structure (140);
a first acoustic black hole, ABH (110), wherein the first ABH (110) is in the form of a concave circular recess provided in the first
damper structure;
a second ABH (120), wherein the second ABH (120) is in the form of a concave circular recess provided in the second damper
structure;
wherein the combination of the first ABH and the second ABH forms a compound ABH, wherein the first ABH and second ABH
are arranged such that they face one another,
and wherein
a cavity (180) is defined by the first ABH and second ABH being provided in a facing manner,
an actuator (150) provided in the cavity and in contact with the first ABH and second ABH; and
applying an actuating force to the first ABH and the second ABH using the actuator.

## Patentansprüche

1. Strukturdämpfer (100) zum Bereitstellen einer Dämpfung einer Primärstruktur (50), wobei der Strukturdämpfer konfiguriert ist, um an die Primärstruktur gekoppelt oder mit dieser verbunden zu werden, der Strukturdämpfer umfassend:
eine erste Dämpferstruktur (130);
eine zweite Dämpferstruktur (140);
ein erstes akustisches schwarzes Loch, ABH (110), wobei das erste ABH (110) in der Form einer konkaven kreisförmigen Vertiefung bereitgestellt in der ersten Dämpferstruktur ist;
ein zweites ABH (120), wobei das zweite ABH in der Form einer konkaven kreisförmigen Vertiefung bereitgestellt in der zweiten Dämpferstruktur ist;
wobei die Kombination des ersten ABH und des zweiten ABH ein zusammengesetztes ABH ausbildet, wobei das erste ABH und das zweite ABH derart angeordnet sind, dass sie einander zugewandt sind, und wobei
eine Kavität (180), die durch das erste ABH und das zweite ABH definiert ist, die in einer zugewandten Weise bereitgestellt sind,
**dadurch gekennzeichnet, dass** der Strukturdämpfer ferner umfasst:
einen Aktuator (150), der in dem Hohlraum bereitgestellt und in Kontakt mit dem ersten ABH und zweiten ABH ist, wobei der Aktuator konfiguriert ist, um eine Betätigungskraft auf das erste ABH und das zweite ABH anzuwenden.

2. Strukturdämpfer (100) nach Anspruch 1, ferner umfassend:
mindestens ein Sensor (190, 290, 390, 490); und
eine Steuerung (H, W), die konfiguriert ist, um den Aktuator in Abhängigkeit von einem Signal von dem mindestens einen Sensor zu steuern.

3. Strukturdämpfer (100) nach einem der vorstehenden Ansprüche, wobei die Kavität (180) umschlossen ist.

4. Strukturdämpfer (100) nach einem der vorstehenden Ansprüche, wobei das erste ABH und das zweite ABH einstückig ausgebildet sind.

5. Strukturdämpfer (100) nach einem der Ansprüche 1 bis 3, wobei das erste ABH und das zweite ABH separat ausgebildet und aneinander gekoppelt sind.

6. Strukturdämpfer (100) nach einem der Ansprüche 2 bis 5, wenn direkt oder indirekt von Anspruch 2 abhängig, wobei die Steuerung konfiguriert ist, um die Betätigungskraft, die durch den Aktuator auf das erste ABH und das zweite ABH aufgebracht wird, zu steuern, um mindestens eines der folgenden zu steuern:
(a) der Schwingung der Primärstruktur;
(b) einer Biegewelle in der Primärstruktur;
(c) der akustischen Strahlung von der Primärstruktur.

7. Strukturdämpfer (100) nach Anspruch 6, wobei die Steuerung konfiguriert ist, um mindestens eines der Merkmale (a) bis (c) durch Steuern der Schwingung des ersten ABH und/oder des zweiten ABH zu steuern; und/oder einer Biegewelle in dem ersten ABH und/oder dem zweiten ABH.

8. Strukturdämpfer (100) nach einem der Ansprüche 2 bis 7, wenn direkt oder indirekt von Anspruch 2 abhängig, wobei die Steuerung konfiguriert ist, um die reflektierte Biegewelle von dem ersten ABH und/oder dem zweiten ABH zu steuern.

9. Strukturdämpfer (100) nach einem der Ansprüche 1 bis 8, wenn direkt oder indirekt von Anspruch 2 abhängig, wobei die Steuerung konfiguriert ist, um die akustische Strahlung von der Primärstruktur zu steuern.

10. Strukturdämpfer (100) nach einem der vorstehenden Ansprüche, wobei das erste ABH und/oder das zweite ABH mit einem Dämpfungsmaterial bereitgestellt wird.

11. Strukturell gedämpfte Struktur (10), umfassend:
eine Primärstruktur (50); und
einen Strukturdämpfer (100) nach einem der vorstehenden Ansprüche, der angeordnet ist, um eine Strukturdämpfung der Primärstruktur bereitzustellen.

12. Strukturell gedämpfte Struktur (10) nach Anspruch 11, wobei die Primärstruktur (50) in einem Fahrzeug (900) oder einer Struktur (1000) enthalten ist.

13. Verfahren zum Dämpfen, umfassend:
Bereitstellen eines Strukturdämpfers zum Bereitstellen einer Dämpfung einer Primärstruktur (50), wobei der Strukturdämpfer (100) konfiguriert ist, um an die Primärstruktur (50) gekoppelt oder mit dieser verbunden zu werden, der Strukturdämpfer umfassend:
eine erste Dämpferstruktur (130);
eine zweite Dämpferstruktur (140);
ein erstes akustisches schwarzes Loch, ABH (110), wobei das erste ABH (110) in der Form einer konkaven kreisförmigen Vertiefung bereitgestellt in der ersten Dämpferstruktur ist;
ein zweites ABH (120), wobei das zweite ABH (120) in der Form einer konkaven kreisförmigen Vertiefung bereitgestellt in der zweiten Dämpferstruktur ist;
wobei die Kombination des ersten ABH und des zweiten ABH ein zusammengesetztes ABH ausbildet, wobei das erste ABH und das zweite ABH derart angeordnet sind, dass sie einander zugewandt sind, und wobei
eine Kavität (180), die durch das erste ABH und das zweite ABH definiert ist, die in einer zugewandten Weise bereitgestellt sind,
einen Aktuator (150), der in der Kavität bereitgestellt und in Kontakt mit dem ersten ABH und zweiten ABH ist; und
Anwenden einer Betätigungskraft auf das erste ABH und das zweite ABH unter Verwendung des Aktuators.

## Revendications

1. Amortisseur structural (100) destiné à fournir un amortissement d'une structure principale (50), l'amortisseur structural étant conçu pour être accouplé à la structure principale ou relié à celle-ci, l'amortisseur structural comprenant :
une première structure d'amortisseur (130) ;
une seconde structure d'amortisseur (140) ;
un premier trou noir acoustique, ABH (110), dans lequel le premier ABH (110) est sous la forme d'un évidement circulaire concave prévu dans la première structure d'amortisseur ;
un second ABH (120), dans lequel le second ABH est sous la forme d'un évidement circulaire concave prévu dans la seconde structure d'amortisseur ;
dans lequel la combinaison du premier ABH et du second ABH forme un ABH composé, dans lequel le premier ABH et le second ABH sont agencés de telle sorte qu'ils se font face, et dans lequel
une cavité (180) est définie par le premier ABH et le second ABH étant fournis mis en face à face,
**caractérisé en ce que** l'amortisseur structural comprend en outre :
un actionneur (150) prévu dans la cavité et en contact avec le premier ABH et le second ABH, dans lequel l'actionneur est conçu pour appliquer une force d'actionnement au premier ABH et au second ABH.

2. Amortisseur structural (100) selon la revendication 1, comprenant en outre :
au moins un capteur (190, 290, 390, 490) ; et
un dispositif de commande (H, W) configuré pour commander l'actionneur en fonction d'un signal provenant de l'au moins un capteur.

3. Amortisseur structural (100) selon l'une quelconque des revendications précédentes, dans lequel la cavité (180) est fermée.

4. Amortisseur structural (100) selon l'une quelconque des revendications précédentes, dans lequel le premier ABH et le second ABH sont formés d'un seul tenant.

5. Amortisseur structural (100) selon l'une quelconque des revendications 1 à 3, dans lequel le premier ABH et le second ABH sont formés séparément et accouplés l'un à l'autre.

6. Amortisseur structural (100) selon l'une quelconque des revendications 2 à 5, lorsqu'il dépend directement ou indirectement de la revendication 2, dans lequel le dispositif de commande est configuré pour commander la force d'actionnement appliquée par l'actionneur, au premier ABH et au second ABH, de manière à commander au moins l'un parmi :
(a) la vibration de la structure principale ;
(b) une onde de flexion dans la structure principale ;
(c) le rayonnement acoustique provenant de la structure principale.

7. Amortisseur structural (100) selon la revendication 6, dans lequel le dispositif de commande est configuré pour commander au moins l'une des caractéristiques (a) à (c) en commandant : la vibration du premier ABH et/ou du second ABH ; et/ou une onde de flexion dans le premier ABH et/ou le second ABH.

8. Amortisseur structural (100) selon l'une quelconque des revendications 2 à 7, lorsqu'il dépend directement ou indirectement de la revendication 2, dans lequel le dispositif de commande est configuré pour commander l'onde de flexion réfléchie provenant du premier ABH et/ou du second ABH.

9. Amortisseur structural (100) selon l'une quelconque des revendications 1 à 8, lorsqu'il dépend directement ou indirectement de la revendication 2, dans lequel le dispositif de commande est configuré pour commander le rayonnement acoustique provenant de la structure principale.

10. Amortisseur structural (100) selon l'une quelconque des revendications précédentes, dans lequel le premier ABH et/ou le second ABH sont pourvus d'un matériau d'amortissement.

11. Structure structurellement amortie (10) comprenant :
une structure principale (50) ; et
un amortisseur structural (100) selon l'une quelconque revendication précédente configuré pour fournir un amortissement structurel de la structure principale.

12. Structure structurellement amortie (10) selon la revendication 11, dans laquelle la structure principale (50) est comprise dans un véhicule (900) ou une structure (1000).

13. Procédé d'amortissement comprenant :
la fourniture d'un amortisseur structural pour assurer l'amortissement d'une structure primaire (50), l'amortisseur structural (100) étant conçu pour être accouplé à, ou relié à, la structure principale (50), l'amortisseur structural comprenant :
une première structure d'amortisseur (130) ;
une seconde structure d'amortisseur (140) ;
un premier trou noir acoustique, ABH (110), dans lequel le premier ABH (110) est sous la forme d'un évidement circulaire concave prévu dans la première structure d'amortisseur ;
un second ABH (120), dans lequel le second ABH (120) est sous la forme d'un évidement circulaire concave prévu dans la seconde structure d'amortisseur ;
dans lequel la combinaison du premier ABH et du second ABH forme un ABH composé, dans lequel le premier ABH et le second ABH sont agencés de telle sorte qu'ils se font face, et dans lequel
une cavité (180) est définie par le premier ABH et le second ABH étant fournis mis en face à face,
un actionneur (150) prévu dans la cavité et en contact avec le premier ABH et le second ABH ; et
l'application d'une force d'actionnement au premier ABH et au second ABH à l'aide de l'actionneur.
